Europäisches Patentamt

(19) European Patent Office

Office européen des brevets

(11) Publication number: **0 201 464**
**B1**

# (12) EUROPEAN PATENT SPECIFICATION

(45) Date of publication of patent specification:
09.08.89

(51) Int. Cl.⁴: **F 16 D 1/10**

(21) Application number: **86830119.3**

(22) Date of filing: **09.05.86**

(54) **Device for manoeuvring fast connection tangential button operated of splined profile clutches, especially on end forks of agriculture cardanic shafts.**

(30) Priority: **10.05.85 IT 940685**

(43) Date of publication of application:
**12.11.86 Bulletin 86/46**

(45) Publication of the grant of the patent:
**09.08.89 Bulletin 89/32**

(84) Designated contracting states:
**AT DE FR GB**

(56) References cited:
**DE–C– 937 084**
**IT–U– 185 533**
**US–A– 3 480 310**
**US–A– 3 926 532**
**US–A– 3 969 033**

(73) Proprietor: **Bondioli, Edi**
**Via Gina Bianchi 18**
**46029 Suzzara Mantova (IT)**

(72) Inventor: **Bondioli, Edi**
**Via Gina Bianchi 18**
**46029 Suzzara Mantova (IT)**

(74) Representative: **Mannucci, Gianfranco, Dott.-Ing.**
**Ufficio Tecnico Ing. A. Mannucci Via della Scala 4**
**I-50123 Firenze (IT)**

## Description

The invention relates to a quick detachable torque transmitting coupling device with a universal joint having an internally splined hub means axially slidably mounted upon a splined shaft having an external recess means and a locking pin transversely slidable in the hub means, with a portion thereof extending into said recess means, said hub being surrounded by a rotatable but axially fixed annular member rigidly carrying a cam means with inclined thrust surfaces on its inner periphery, said cam means being rotatably movable with the annular member for limited rotary motion between a first position wherein said cam means causes the locking pin to be moved into its locking position and a second position wherein said cam means causes the locking pin to be moved into its non-locking position; and with a spring means arranged between the locking pin and the internally splined hub means and urging the locking pin outwardly against the inner thrust surfaces of the cam means.

A torque transmitting coupling device of this type is known from US-A-3 926 532. This known quick detachable torque transmitting coupling device has two sets of springs. One set of springs biases the locking pins into their non-locking position and the other circumferentially arranged set of springs biases the annular member into its locking position. This results in a construction with a high number of pieces which have to be assembled together.

The object of the invention is a quick detachable torque transmitting coupling device of the above mentioned type having less parts than the known device and being consequently less expensive and easier to assemble.

According to the invention, a quick detachable torque transmitting coupling device is characterized in that the locking pin and the inclination of the thrust surfaces are adapted to cause said rotary motion of the annular member into its locking position by the mere biasing force of said spring means.

Further advantageous features of the invention are set out in the dependent claims.

The invention will be better understood by following the description and the accompanying drawing, which shows a practical, non limitative exemplification of the same invention. In the drawing:

Figs.1, 2 and 3 show a first embodiment in a partially sectioned side view and in the section on line II-III of Fig.1 in the blocking condition and in the condition of already occurred release;

Figs.4 and 5 show, similarly to Figs.1 and 2, a modified embodiment;

Figs.6 to 9 show as many modified embodiments in a section similar to that of Fig.2.

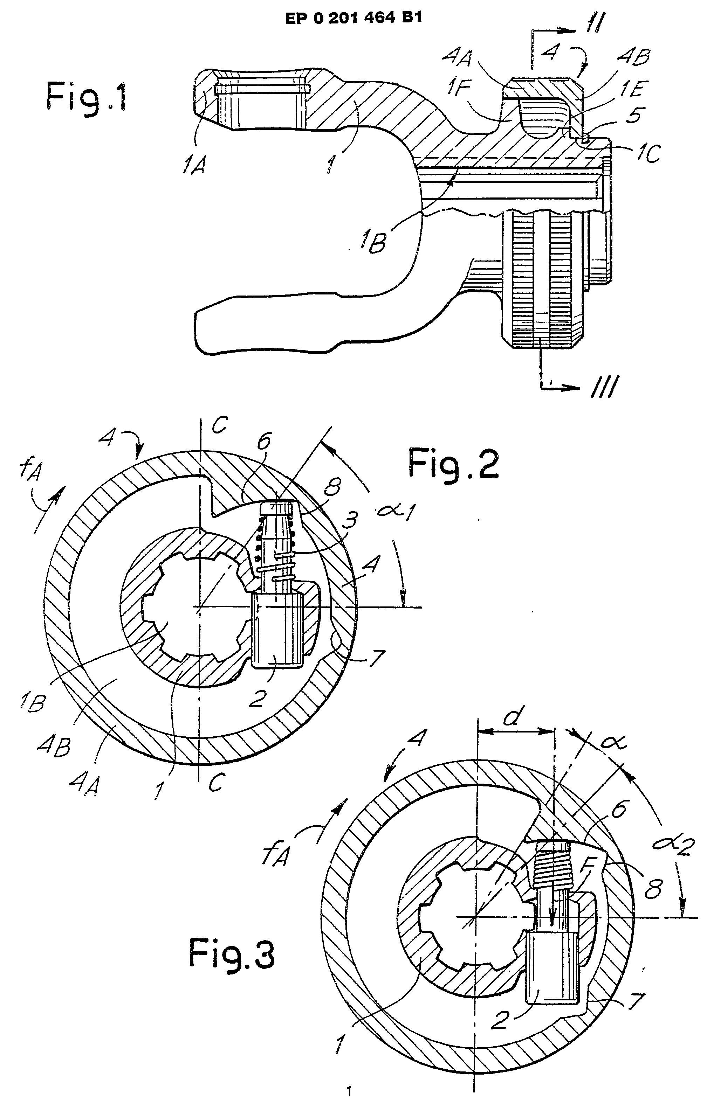

According to Figs.1 to 3, numeral 1 indicates a hub means integral with a fork 1A, having a splined hub 1B for the joint of the shaft to be axially blocked by a locking pin 2 sliding in a tangential seat of hub 1 and able to interfere with the hole 1B and engage an annular groove of the shaft. Numeral 3 indicates a contrast spring of the pin 2, which urges this pin into the blocking position (Fig.2); by acting on pin 2 against the spring action, that is, according to F (Fig.3), the interference is annulled and the shaft is released from the hub.

To perform this operation, an annular member 4 is used which encircles the hub 1 at the pin zone and forms a manoeuvring sleeve or shell. This sleeve makes up a cylindrical skirt portion 4A and an inner radially extending flange 4B, which rests on a rotation seat formed by the body 1, between a shoulder and a snap ring 5 for the restraint of annular member 4 to the fork.

The pin 2 and spring 3 may maintain the same configurations and sizes which they have on the normal and forks; Figs.2 and 3 show a configuration, widely spread on the market, to which the mechanism has been applied.

The annular member 4 is guided within the surfaces 1C machined on the hub and is retained on one side by a shoulder 1E and on the other, by the snap ring 5 housed in a seat being machined likewise the guide surfaces 1C and the shoulder 1E.

On the opposite side to the inner radially extending flange 4B, a flange 1F may be provided, making up a support and closure wall; within certain limits, this wall can also be formed, in part, by the skirt 4A.

The annular member 4 has the outside part of circular or slightly shaped form, and such a width as to completely cover the portion of hub 1 engaged by the pin 2. However during the rotation, no hanging outrigger or projection occurs which could be a potential danger source for the operator.

In the inside, in correspondence of the head of pin 2, the skirt 4A exhibits a length of thrust surface 6 having as a directrix curve an arc of circle involute making up the surface performing a thrust upon the pin 2.

The rotation $\alpha = \alpha_1 - \alpha_2$ (Figs. 2 and 3) of the annular member or sleeve 4 according to fA causes, owing to the contrast of the thrust surface 6 with the head of pin 2, the sliding of the latter within its seat on the fork hub according to arrow F and against the action of spring 3. Accordingly, the interference configuration with the splined profile shown in Fig.2 is changed into a non-interference configuration shown in Fig.3. As soon as the annular member or sleeve 4 is released, under the action of the torque generated by the spring 3 contrasting the pin 2, the sleeve is brought again to the initial position in the direction opposite to arrow fA and, at the same time, the pin 2 takes up again the interference configuration with the splined profile 1B (Fig.2). The rotation of the sleeve is thus the manoeuvre or handling operation which allows the coupling and release of the hub with and from the motion drive.

The outer surface of the skirt 4A may be knurled or otherwise worked to increase the grip during the handling operation. The same effect can be obtained by providing an external, slightly corrugated shape; such shape is useful whenever — for construction reasons related to the splined profile sizes — the overall dimensions reach such a value that the hand is no longer able to embrace it.

To limit the angular stroke of the annular member or sleeve 4, a stop 7 may be provided, which acts in the arrangement of Fig. 3, on the head of pin 2, which projects after the release is over.

Figs. 1 to 3 show hubs intended to engage motion drives rotating clockwise. In fact by such rotation, the occurrence of a fortuitous resistance on sleeve 4 which might tend to brake it, does not cause the sliding of pin 2. and thus it is avoided that the configuration for the release from the motion drive can be reached (Fig. 3) - but causes only the contact of the head of same pin 2 on a stop surface 8 (Fig. 2). For those hubs destined to be engaged with anticlockwise motion drives, the sleeve and the hub must have a conformation symmetrical in respect to the C-C axis shown in Fig. 2; of course the operating principle of the apparatus remains unchanged.

The operating is not affected by the shape of the splined profile. Profiles with a great number of teeth or having great dimensions may require longer strokes of the pin, which can be achieved by suitably extending the thrust surface 6 and, accordingly, increasing the sleeve diameter.

Figs. 1 to 3 show an embodiment of the apparatus having a conformation in which the design of the hub 1 and the annular member 4 are suitable to produce a completely enclosed unit.

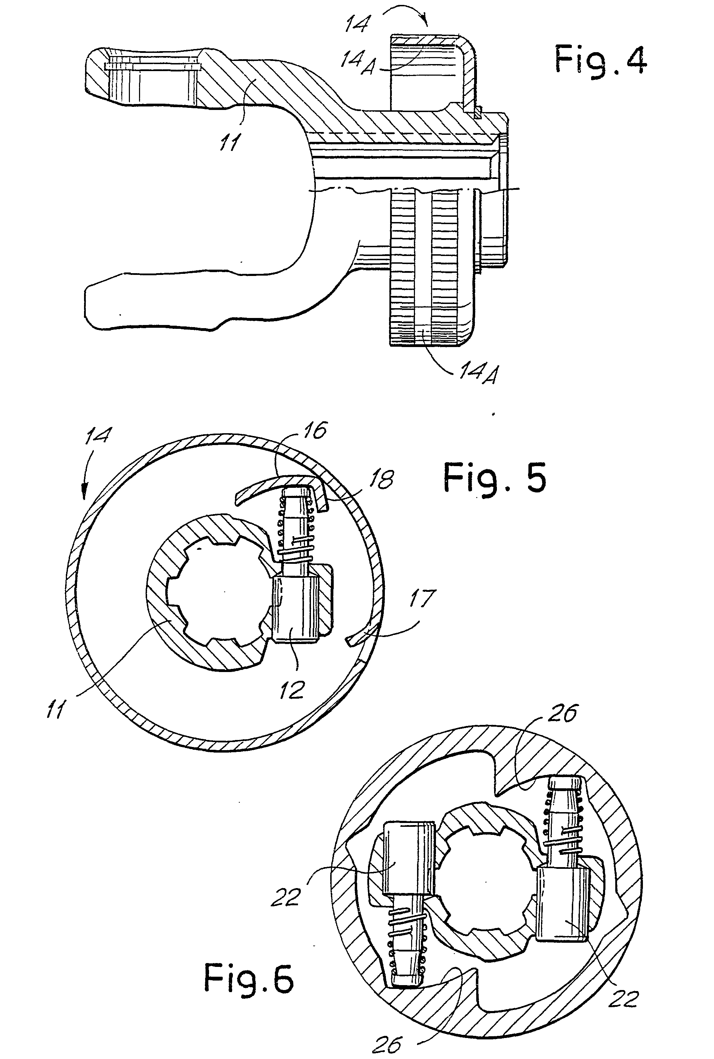

Figs. 4 and 5 show the same apparatus in an open conformation which is well suitable to realize the shell through stamped plate. The reference numbers are the same used in Figs. 1 to 3, but increased by « 10 ». In this embodiment, the annular member 14 made up of plate may be provided with a profile 16 added thereto or formed through a shearing and a bending of the laminar material; the stops 17 and 18, which limit the angular travel, may also be obtained through a shearing and bending process.

In Fig. 6 an embodiment is shown with two pins 22 with relevant springs 23, which are shaped and dimensioned according to the requirements of the profile, the hub and the type of usage, without alteration of the operation and the handling capability. Obviously, the annular member 4 carries at the inside as many thrust surfaces 26 as many are the pins provided on the hub.

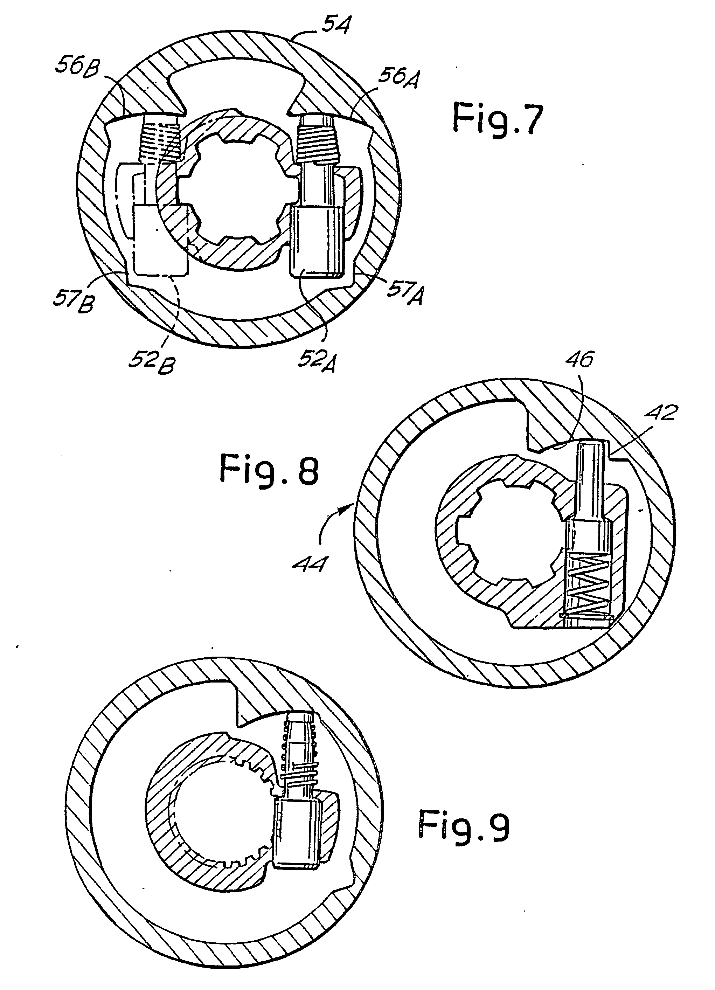

According to a modified embodiment of the device, two symmetrical inner thrust surfaces 56A, 56B are provided on the cylindrical skirt so that the non locking position can be reached by rotary motion of the annular member in one or the other direction (Fig. 7). This device can be used for unlocking pins located on the relevant shaft depending on either a right or a left orientation, i. e. it can be used for pins which are mounted in such a way that they are unlocked either with a clockwise or with a counter-clockwise displacement of the annular member, alternatively.

Fig. 8 shows an embodiment in which the pin 42 is of traditional and widely-spread shape, being different from that of Figs. 1 to 3, and still manoeuvrable through an annular member 44 provided with a thrust surface 46 similarly to the preceding examples.

In Fig. 9, a similar solution is applied to a hub having a splined profile different from that of the preceding examples.

The thrust surface 6, 16, 26 etc. is preferably realized so as to cooperate with the pin end in such a way that the thrust on same pin shall be always axially directed, thereby obtaining a substantial nimbleness of operation.

## Claims

1. Quick detachable torque transmitting coupling device with a universal joint having an internally splined hub means (joint body 1, 1B, 11) axially slidably mounted upon a splined shaft having an external recess means and a locking pin (button 2, 12, 22, 42) transversely slidable in the hub means, with a portion thereof extending into said recess means, said hub being surrounded by a rotatable but axially fixed annular member (4, 14) rigidly carrying a cam means with inclined thrust surfaces (6) on its inner periphery, said cam means being rotatably movable with the annular member (4, 14) for limited rotary motion between a first position wherein said cam means causes the locking pin to be moved into its locking position and a second position wherein said cam means causes the locking pin to be moved into its non-locking position; and with a spring means (3) arranged between the locking pin and the internally splined hub means (1, 1B, 11) and urging the locking pin outwardly against the inner thrust surfaces (6) of the cam means, characterized in that the locking pin (2, 12, 22, 42) and the inclination of the thrust surfaces (6) are adapted to cause said rotary motion of the annular member (4, 14) into its locking position by the mere biasing force of said spring means (3).

2. Device according to the preceding claim, characterized in that said annular member has an outer cylindrical skirt (4A; 14A) and an inner radially extending flange (4B; 14B) rotatably supported on the joint body (1) between a shoulder (1E) of the joint body and a snap ring (5).

3. Device according to the preceding claims, characterized in that the annular member (4) has a cylindrical skirt (4A) with the thrust surface (6) being formed partly on an inner protrusion and partly on an inner recess of the cylindrical part.

4. Device according to claims 1 and 2, characterized in that the annular member (14) is formed by the cylindrical skirt (14A) of sheet material and an inner radially extending part (14B) also made of sheet material and that the inner thrust surface (16) is formed by a shearing and a bending operation on the sheet material of the annular member.

5. Device according to the preceding claims, characterized in that a flange (1F) forming one-piece with the cylindrical skirt (4A) or the hub means (1, 1B, 11) is provided opposite the radially extending flange (4B).

6. Device according to the preceding claims, characterized in that two symmetrical inner thrust surfaces (56A, 56B) are provided on the cylindrical skirt so that the non-locking position can be reached by rotary motion of the annular member in one or the other direction for unlocking the pin located on the relevant shaft depending on either a right or a left orientation.

## Patentansprüche

1. Schnellkupplung zur Drehmomentübertragung, mit einem Universalgelenk, bei dem eine innen genutete Nabe (Gelenkkörper 1, 1B, 11) auf einer Nutenwelle axial verschiebbar ist, welche eine äußere Ausnehmung aufweist, in die ein Abschnitt eines in der Nabe quer verschiebbar angebrachten Sperrstiftes (Kopf 2, 12, 22, 42) hineinreicht, wobei die Nabe von einem drehbaren, aber axial festgelegten Ringkörper (4, 14) umgeben ist, der innenseitig eine Nockeneinrichtung mit geneigten Steuerflächen (6) aufweist, wobei die Nockeneinrichtung mit dem Ringkörper (4, 14) begrenzt zwischen einer ersten Stellung, in der die Nockeneinrichtung den Sperrstift in seine Sperrstellung bewegt, und einer zweiten Stellung verdrehbar ist, in der die Nockeneinrichtung den Sperrstift zur Verstellung in die Freigabestellung veranlaßt, und wobei zwischen dem Sperrstift und der innen genuteten Nabe (1, 1B, 11) ein Federelement (3) angeordnet ist, das den Sperrstift im Sinne einer Verstellung nach außen, gegen die inneren Steuerflächen (6) der Nockeneinrichtung belastet, dadurch gekennzeichnet, daß der Sperrstift (2, 12, 22, 42) und die Neigung der Steuerflächen (6) dafür ausgebildet sind, daß sie durch ihr Zusammenwirken die Drehbewegung des Ringkörpers (4, 14) in seine Sperrstellung unter der Vorspannkraft des Federelementes (3) bewirken.

2. Kupplung nach dem vorhergehenden Anspruch, dadurch gekennzeichnet, daß der Ringkörper einen äußeren, zylindrischen Mantel (4A; 14A) und einen inneren, radial verlaufenden Flansch (4B; 14B) aufweist, der am Gelenkkörper (1) zwischen einer Schulter (1E) dieses Gelenkkörpers und einem Federring (5) drehbar abgestützt ist.

3. Kupplung nach den vorhergehenden Ansprüchen, dadurch gekennzeichnet, daß der Ringkörper (4) einen zylindrischen Mantel (4A) aufweist, wobei die Steuerflächen (6) zum Teil an einem inneren Vorsprung und zum Teil an einer inneren Vertiefung des zylindrischen Teiles ausgeformt sind.

4. Kupplung nach den Ansprüchen 1 und 2, dadurch gekennzeichnet, daß der Ringkörper (14) aus dem zylindrischen Mantel (14A) aus Blechmaterial und einem inneren, radial verlaufenden Teil (14B) ebenfalls aus Blechmaterial geformt ist und daß die innere Steuerfläche (16) durch einen Abscher- und Biegevorgang aus dem Blechmaterial des Ringkörpers geformt ist.

5. Kupplung nach den vorhergehenden Ansprüchen, dadurch gekennzeichnet, daß der Flansch (1F) mit dem zylindrischen Mantel (4A) einen Teil bildet oder die Nabe (1, 1B, 11) dem radial verlaufenden Flansch (4B) entgegengesetzt angeordnet ist.

6. Kupplung nach den vorhergehenden Ansprüchen, dadurch gekennzeichnet, daß zwei symmetrische, innere Führungsflächen (56A, 56B) am zylindrischen Mantel vorgesehen sind, so daß die entsperrte Stellung durch eine Drehbewegung des Ringkörpers in die eine oder andere Richtung erreicht werden kann, zur Entriegelung des an der zugehörigen Welle, abhängig entweder in einer rechten oder linken Orientierung, vorgesehenen Stiftes.

## Revendications

1. Dispositif d'accouplement et de transmission de couple, pouvant être rapidement démonté, comportant un joint universel avec un moyeu cannelé intérieurement (corps articulé 1, 1B, 11) monté de façon à pouvoir coulisser axialement sur un arbre cannelé présentant un évidement extérieur et un axe de blocage (bouton 2, 12, 22, 42) pouvant coulisser transversalement dans le moyeu, avec une portion de celui-ci s'étendant dans l'évidement, le moyeu étant entouré d'un élément annulaire rotatif mais axialement fixe (4, 14) supportant de façon rigide une came avec des surfaces de butée inclinées (6) sur sa périphérie intérieure, cette came étant mobile en rotation avec l'élément annulaire (4, 14) pour un mouvement rotatif limité entre une première position dans laquelle la came provoque le déplacement de l'axe de blocage dans sa position de blocage et une seconde position dans laquelle la came provoque le déplacement de l'axe de blocage dans sa position de non-blocage ; et avec un ressort (3) disposé entre l'axe de blocage et le moyeu cannelé intérieurement (1, 1B, 11) et forçant l'axe de blocage vers l'extérieur contre les surfaces de butée intérieures (6) de la came, caractérisé en ce que l'axe de blocage (2, 12, 22, 42) et l'inclinaison des surfaces de butée (6) sont aptes à provoquer le mouvement rotatif de l'élément annulaire (4, 14) dans sa position de blocage par la simple force de sollicitation élastique du ressort (3).

2. Dispositif selon la revendication précédente, caractérisé en ce que l'élément annulaire présente une jupe cylindrique extérieure (4A ; 14A) et un collet intérieur s'étendant radialement (4B ; 14B) supporté de façon rotative sur le corps articulé (1) entre un épaulement (1E) du corps articulé et un jonc de retenue élastique ou circlip (5).

3. Dispositif selon les revendications précédentes, caractérisé en ce que l'élément annulaire (4) comporte une jupe cylindrique (4A), la surface de butée (6) étant formée partiellement sur une saillie intérieure et partiellement sur un évidement intérieur de la partie cylindrique.

4. Dispositif selon les revendications 1 et 2, caractérisé en ce que l'élément annulaire (14) est formé par la jupe cylindrique (14A) d'une tôle et d'une pièce intérieure s'étendant radialement (14B) réalisée également à partir d'une tôle et en ce que la surface de butée intérieure (16) est réalisée par une opération de découpe et de cintrage sur la tôle de l'élément annulaire.

5. Dispositif selon les revendications précédentes, caractérisé en ce qu'un collet (1F) formant une seule pièce avec la jupe cylindrique (4A) ou le moyeu (1, 1B, 11) est prévu en opposition au collet s'étendant radialement (4B).

6. Dispositif selon les revendications précédentes, caractérisé en ce que deux surfaces de butée intérieures symétriques (56A, 568) sont prévues sur la jupe cylindrique de sorte que la position de non blocage peut être atteinte par le mouvement rotatif de l'élément annulaire dans l'un ou l'autre sens pour le déblocage de l'axe situé sur l'arbre correspondant selon qu'il s'agit d'une orientation à droite ou à gauche.

EP 0 201 464 B1

Fig.1

Fig.2

Fig.3

Fig.4

*14*

*14A*

*11*

*14A*

Fig. 5

*14*

*16*

*18*

*11*

*12*

*17*

*26*

*22*

Fig.6

*22*

*26*

2

Fig.7

Fig.8

Fig.9